# EUROPÄISCHE PATENTSCHRIFT

(11) **EP 3 829 931 B1**
(45) Veröffentlichungstag und Bekanntmachung des Hinweises auf die Patenterteilung: **10.12.2025**
(21) Anmeldenummer: 19749249.9
(22) Anmeldetag: 19.07.2019
(51) Int. Cl.: B60R 11/02

(54) **ANZEIGEEINRICHTUNG UND FAHRZEUG**
DISPLAY DEVICE, AND VEHICLE
DISPOSITIF D'AFFICHAGE ET VÉHICULE

(30) Priorität: 27.07.2018 DE 102018212604
(43) Veröffentlichungstag der Anmeldung: 09.06.2021
(73) Patentinhaber: Bayerische Motoren Werke Aktiengesellschaft, 80809 München (DE)
(72) Erfinder: BRUEGL, Juergen, 81669 Muenchen (DE); WALTER, Alexander, 80796 Muenchen (DE); WOKRINEK, Michael, 84079 Bruckberg (DE); LATHWESEN, Harald, 85419 Mauern (DE)
(86) Internationale Anmeldenummer: PCT/EP2019/069470
(87) Internationale Veröffentlichungsnummer: WO 2020/020763

(56) Entgegenhaltungen:
- EP-A1- 2 873 563
- EP-A1- 3 683 097
- EP-A1- 3 845 420
- EP-A1- 3 845 420
- EP-A2- 3 708 432
- DE-A1- 102018 129 479
- US-A1- 2009 038 422
- US-B1- 6 256 078

## Beschreibung

Die vorliegende Erfindung betrifft eine Anzeigeeinrichtung für den Innenraum eines Fahrzeugs sowie ein Fahrzeug als solches.

Es ist bekannt, in einem Fahrzeug und insbesondere in einem allgemeinen Kraftfahrzeug oder Personenkraftwagen eine Anzeigeeinrichtung zum optischen Anzeigen von Information einem Sitzplatz zugeordnet an der Innenseite des Fahrzeugdachs, zum Beispiel am Himmel, zu montieren. Es ist auch bekannt, derartige Anzeigeeinrichtungen im Fondbereich eines Fahrzeugs in eine Rückseite eines Fahrersitzes oder eines Beifahrersitzes, zu Beispiel im Bereich der Kopfstütze, zu integrieren.

Einerseits sind derartige bekannte Anzeigeeinrichtungen von vergleichsweise geringer räumlicher Ausdehnung, wobei dies auch dem Umstand geschuldet ist, dass mit größeren Anzeigen verbundene Massen, insbesondere bei der Dachinnenmontage, nicht in zuverlässiger Weise gehandhabt werden können.

Die EP 2 873 563 A1 beschreibt ein System und ein Verwendungsverfahren, bei welchen die Position eines Fahrzeugsitzes überwacht und automatisch die Position einer Fahrzeuganzeige basierend auf der aktuellen Sitzposition angepasst wird, wodurch Augenbelastung, Ermüdung, Nacken- und Rückenschmerzen reduziert werden.

Die US 6 256 078 B1 betrifft eine Verstauvorrichtung für einen Bildmonitor in einem Transportmittel, wobei ein Rahmen an einer Decke des Transportmittels angebracht ist, auf dem ein Flüssigkristallpanel so verstaut ist, dass die Oberfläche des Panels zur Decke zeigt. Wenn das Flüssigkristallpanel zum Anzeigen positioniert wird, wird sie durch den Antriebsmechanismus derart gedreht, dass der auf dem Sitz sitzende Passagier sie leicht beobachten kann. Der Antrieb der Flüssigkristalltafel von der Verstauposition in die Anzeigeposition wird durch einen Motor bewirkt, wobei ein Verschieben von der Anzeigeposition in die Verstauposition durch eine Feder ausgeführt wird. Wenn die Flüssigkristalltafel während der Anzeige einen Stoß durch den Aufprall eines Kopfes eines Fahrgasts erfährt, kann eine Erfassungsvorrichtung eine Abweichung des Panels erfassen und das Signal an eine Steuerschaltung übertragen. Die Steuerschaltung bringt dann die Flüssigkristalltafel durch Lösen einer elektromagnetischen Bremse in die Verstauposition zurück.

Die US 2009 / 038 422 A1 offenbart eine Vorrichtung zum Einstellen eines Winkels eines Monitors, die eine Führungseinheit aufweist, die an einer Dachplatte eines Fahrzeugs befestigt ist. Die Führungseinheit weist mindestens eine Zahnschiene mit einem horizontalen Bahnteil und mit einem bogenförmigen Bahnteil auf. Die Vorrichtung weist auch eine Drehwelle auf, welche an einem Monitor montiert ist und Zahnradzähne aufweist, die mit der Zahnschiene in Eingriff stehen.

Der Erfindung liegt die Aufgabe zu Grunde, eine Anzeigeeinrichtung für den Innenraum eines Fahrzeugs sowie ein Fahrzeug als solches zu schaffen, bei denen mit einfachen Mitteln eine zuverlässige und leichte Handhabung auch großer und schwerer Anzeigeeinheiten möglich ist.

Die der Erfindung zu Grunde liegende Aufgabe wird bei einer Anzeigeeinrichtung erfindungsgemäß mit den Merkmalen des Anspruchs 1 und bei einem Fahrzeug erfindungsgemäß mit den Merkmalen des Anspruchs 10 gelöst. Vorteilhafte Weiterbildungen sind jeweils Gegenstand der abhängigen Ansprüche.

Gemäß einem ersten Aspekt der vorliegenden Erfindung wird eine Anzeigeeinrichtung für den Innenraum eines Fahrzeugs und insbesondere eines Kraftfahrzeugs oder Personenkraftwagens geschaffen, welche ausgebildet ist mit einer Anzeigeeinheit, welche zum optischen Anzeigen von Information eingerichtet ist, und mit einer Bewegungseinrichtung, welche eingerichtet ist, die Anzeigeeinheit, insbesondere steuerbar, zwischen einer Nichtgebrauchsstellung, parallel zu einem Dachhimmel des Fahrzeugs, und einer Gebrauchsstellung, insbesondere abgeschwenkt vom Dachhimmel des Fahrzeugs, zu überführen und, insbesondere steuerbar, in der Nichtgebrauchsstellung und/oder der Gebrauchsstellung zu haltern.

Dabei ist die Bewegungseinrichtung
(i) mit ersten Führungselementen, welche direkt und drehbar gelagert an der Anzeigeeinheit zur Definition einer Schwenkachse zum Verschwenken der Anzeigeeinheit zumindest zwischen der Nichtgebrauchsstellung und der Gebrauchsstellung angebracht sind,
(ii) mit zweiten Führungselementen, welche jeweils über genau einen Koppelhebel der Anzeigeeinrichtung mit der Anzeigeeinheit in mechanischer Wirkverbindung gekoppelt oder koppelbar sind, und
(iii) mit Führungsschienen zur Anbringung am Dachhimmel, mit einer Führungsbahn, zur Aufnahme der ersten und zweiten Führungselemente und zu deren Bewegung darin entlang der Führungsbahn ausgebildet.

Durch diese Maßnahmen und insbesondere durch das Zusammenwirken der ersten Führungselemente und der zweiten Führungselemente mit Koppelhebel in den Führungsschienen ergibt sich die Möglichkeit, auf Grund ihrer höheren Masse bisher schwer zu handhabende Anzeigeeinrichtungen mit größerer und damit schwerer Anzeigeeinheit auf einfache Weise und zuverlässig im Innenraum eines Fahrzeugs zu handhaben, wobei zum Beispiel die Trägheit der Anzeigeeinrichtung im Zusammenhang mit den Bewegungsmöglichkeiten auf Grund der Führungselemente in den Führungsschienen im Zusammenwirken mit dem Koppelhebel für ein passives und von der Trägheit getriebenes Ausweichen der Anzeigeeinheit aus dem Fahrgastraum genutzt werden kann.

Bei einer vorteilhaften Ausgestaltungsform der erfindungsgemäßen Anzeigeeinrichtung sind die Koppelhebel isoliert oder kombiniert als Paar, zueinander gleich oder im Wesentlichen gleich, mit gleicher Länge, linear oder im Wesentlichen linear, zueinander parallel ausgerichtet, zueinander bündig ausgerichtet und/oder jeweils mit einem ersten Ende und mit einem zweiten Ende ausgebildet. Durch diese Maßnahmen ergibt sich einzeln oder in Kombination hohes Maß an Flexibilität durch Anpassbarkeit an die jeweiligen geometrischen Verhältnisse im Fahrzeuginnenraum, auch im Verhältnis zu einer jeweiligen Ausgestaltungsform der konkreten Anzeigeeinheit hinsichtlich Geometrie und Gewicht.

Dabei kann es gemäß einer anderen vorteilhaften Weiterbildung der erfindungsgemäßen Anzeigeeinrichtung vorgesehen sein, dass ein jeweiliges erstes Ende eines Koppelhebels drehbar gelagert an der Anzeigeeinheit angebracht ist und/oder dass ein jeweiliges zweites Ende eines Koppelhebels drehbar gelagert an einem zugeordneten zweiten Führungselement angebracht ist. Durch diese Maßnahmen lässt sich im Zusammenwirken der ersten Führungselemente und der zweiten Führungselemente mit dem Koppelhebel über die Beweglichkeit und den Eingriff in den Führungsschienen in zuverlässiger und stabiler Art und Weise ein Schwenkmechanismus zum - insbesondere kontinuierlichen - Verschwenken der Anzeigeeinheit zwischen der Nichtgebrauchsstellung und der Gebrauchsstellung realisieren.

Dabei ist es ferner vorteilhaft, wenn gemäß einer anderen Ausführungsform der erfindungsgemäßen Anzeigeeinrichtung eine Position einer Montagestelle eines ersten Endes eines Koppelhebels an der Anzeigeeinheit jeweils von einer Position einer Montagestelle eines zugeordneten ersten Führungselements räumlich beabstandet ist und/oder an einer oder im Bereich einer Längskante der Anzeigeeinheit angeordnet ist. Mit diesen Maßnahmen lässt sich in zuverlässiger Weise ein Ausbalancieren auch größerer Anzeigeeinheiten erreichen.

Im Hinblick auf die Ausgestaltung der ersten und zweiten Führungselemente ergeben sich zur Anpassung an die Gegebenheiten des Fahrzeuginnenraums und/oder der Anzeigeeinrichtung vielfältige Möglichkeiten.

So ist es denkbar, dass alternativ oder in beliebiger Kombination die ersten Führungselemente und/oder die zweiten Führungselemente
- untereinander oder insgesamt gleich oder im Wesentlichen gleich,
- als Gleiter und/oder
- zu einer gleitenden Bewegung in einer jeweiligen Führungsschiene (55) eingerichtet
ausgebildet sind.

Ferner ist es alternativ oder zusätzlich denkbar, dass die ersten Führungselemente an einer oder im Bereich einer ersten Querkante und/oder einer Längskante der Anzeigeeinheit angebracht sind.

Dabei kann im am zugeordneten Fahrzeug montierten Zustand der Anzeigeeinrichtung die erste Querkante, insbesondere zusammen mit der Schwenkachse, parallel zu einer Querstreckungsrichtung des Fahrzeugs ausgerichtet sein. Auf diese Art und Weise lässt sich im Fahrzeuginnenraum zum Beispiel eine für den gesamten Fondbereich geeignete gemeinsame Ausrichtung der Anzeigeeinheit der Anzeigeeinrichtung bequem ausbilden.

Grundsätzlich lässt sich die einer Anzeigeeinrichtung zu Grunde liegende Anzeigeeinheit geometrisch beliebig ausgestalten.

Jedoch ergeben sich besonders einfache Verhältnisse dann, wenn gemäß einer anderen vorteilhaften Ausgestaltungsform der erfindungsgemäßen Anzeigeeinrichtung die Anzeigeeinheit mit im Wesentlichen rechteckiger Gestalt, im am zugeordneten Fahrzeug montierten Zustand der Anzeigeeinrichtung mit parallel zu einer Querstreckungsrichtung des Fahrzeugs ausgerichteten Querkanten und/oder im am zugeordneten Fahrzeug montierten Zustand der Anzeigeeinrichtung mit parallel zu einer Längserstreckungsrichtung des zugeordneten Fahrzeugs ausgerichteten Längskanten ausgebildet ist. Auch dadurch wird eine für den Fondbereich günstige Orientierung der Anzeigeeinheit der Anzeigeeinrichtung unterstützt.

Auch für die verwendeten Führungsschienen ergeben sich vielfältige Variationsmöglichkeiten.

So ist es denkbar, dass die einer Anzeigeeinrichtung zu Grunde liegenden Führungsschienen
- als Paar,
- zueinander gleich oder im Wesentlichen gleich,
- linear oder im Wesentlichen linear,
- gekrümmt oder abschnittsweise gekrümmt,
- zueinander parallel ausgerichtet,
- zueinander bündig ausgerichtet, insbesondere in Bezug auf ihre jeweiligen ersten und zweiten Enden,
- im am zugeordneten Fahrzeug montierten Zustand der Anzeigeeinrichtung an einem oder im Bereich eines Dachhimmels angebracht und/oder
- im am zugeordneten Fahrzeug montierten Zustand der Anzeigeeinrichtung parallel zu einer Längserstreckungsrichtung des Fahrzeugs ausgerichtet ausgebildet sind.

Gerade bei der Verwendung von Anzeigeeinrichtungen, die mit dem Einnehmen einer Gebrauchsstellung in den Fahrgastraum des Innenraums des Fahrzeugs hineinragen, sind Aspekte einer leichteren Bedienbarkeit und Beweglichkeit von besonderer Bedeutung, insbesondere bei der Verwendung großer oder massereicher Anzeigeeinheiten.

Um dies zu erreichen, können gemäß einem weiteren Aspekt der vorliegenden Erfindung bestimmte Mechanismen in die erfindungsgemäße Anzeigeeinrichtung eingebracht werden, die ein höheres Maß an passiver Beweglichkeit eine Anzeigeeinheit bewirken.

So ist es gemäß einer vorteilhaften Weiterbildung der erfindungsgemäßen Anzeigeeinrichtung denkbar, an oder in einem jeweiligen Koppelhebel eine Sollknickstelle mit vordefinierter Losbrechkraft als Sollknickkraft derart auszubilden, dass beim Überschreiten der Sollknickkraft der Koppelhebel an der Sollknickstelle einknickt und dabei von einer nicht geknickten Normalform in eine geknickte Sicherheitsform übergeht. Mit der geknickten Sicherheitsform des Koppelhebels verbunden ist eine entsprechende Verschwenkung der Anzeigeeinheit innerhalb des Innenraums des Fahrzeugs, zum Beispiel von einer Gebrauchsstellung der Anzeigeeinheit in Richtung auf die Nichtgebrauchsstellung und insbesondere parallel zum Dachhimmel, wodurch der Innenraum des Fahrzeugs freigegeben wird. Die entsprechend notwendige Losbrechkraft als Sollknickkraft wird z.B. erzeugt beim Auftreten einer ein vorgegebenes Mindestmaß übersteigenden Verzögerung auf Grund der Trägheit der Masse der Anzeigeeinheit bei Bewegungsverzögerung.

Dabei kann je nach Orientierung der Schwenkachse und/oder der diese definierenden ersten Führungselemente in Relation zum Koppelhebel und dessen Montagepunkten an der Anzeigeeinheit und der Position der zweiten Führungselemente ein trägheitgetriebenes Ausweichen der Anzeigeeinheit beim Auftreten ein vorgegebenes Mindestmaß übersteigender Verzögerungskräfte genutzt werden.

Alternativ oder zusätzlich ist es denkbar, als Maßnahme eine Rutschkupplung und/oder eine Bremse, insbesondere jeweils mit Rücklaufsperre, an einem oder in einem ersten Führungselement oder zwischen einem ersten Führungselement und einer zugeordneten Führungsschiene und mit einer vorbestimmten Haltekraft als Sollhaltekraft derart auszubilden, dass sich beim Überschreiten der Sollhaltekraft ein jeweiliges erstes Führungselement in einer jeweils zugeordneten Führungsschiene - der einwirkenden Kraft folgend - bewegt. Das bedeutet, dass in einem Fall mit ein vorgegebenes Mindestmaß übersteigender Verzögerung auf Grund der Trägheit die maximale Haltekraft oder Bremskraft der Kupplung oder der Bremse überschritten wird, so dass erste Führungselemente entsperrt werden und sich entlang der Führungsbahnen der Führungsschienen bewegen und somit bewirken, dass über die mechanische Kopplung mit der Anzeigeeinheit diese aus dem Fahrgastraum, also dem Innenraum des Fahrzeugs, von einer Gebrauchsstellung in eine Nichtgebrauchsstellung ausweicht und dadurch den Innenraum des Fahrzeugs freigibt.

Dabei können die Sollknickkraft und/oder die Sollhaltekraft einen Wert aufweisen, welcher in einem Bereich entsprechend einer Beschleunigung im Bereich von 5 g oder darüber liegt.

Grundsätzlich ist es denkbar, die Führungselemente, den Koppelhebel und die Führungsschienen so auszubilden, dass über entsprechende Hemmungen ein Aus- und Einklappen und/oder ein Positionieren der Anzeigeeinheit der erfindungsgemäßen Anzeigeeinrichtung per Hand erfolgen kann.

Jedoch ist bei einer besonders vorteilhaften Ausführungsform der erfindungsgemäßen Anzeigevorrichtung eine Antriebseinheit ausgebildet, welche zum Antreiben der ersten Führungselemente und/oder der zweiten Führungselemente und für ein getrenntes und/oder gemeinsames und insbesondere gleiches Bewegen der ersten Führungselemente und der zweiten Führungselemente in einer jeweiligen Führungsschiene eingerichtet ist.

Zusätzlich oder alternativ ist es denkbar, dass die Antriebseinheit mit einem oder mit mehreren steuerbaren Antrieben und mit diesen mechanisch gekoppelten oder koppelbaren und jeweiligen Führungselementen zugeordneten Antriebsmitteln, insbesondere in Form von Bürstenkabeln oder Helixkabeln, welche für einen, insbesondere kämmenden, Eingriff durch erste und/oder zweite Führungselemente zu deren Bewegung eingerichtet sind, ausgebildet ist.

Es kann dabei also insbesondere ein Antrieb verwendet werden, wie er auch bei Schiebedächern zum Einsatz kommen kann, um die entsprechenden Dachelemente in einem entsprechenden Rahmen anzutreiben.

Durch das voneinander unabhängige oder gemeinsame Bewegen der Führungselemente sind unterschiedliche Bewegungsmodi der Anzeigeeinheit der Anzeigeeinrichtung realisierbar.

Ein gemeinsames und gleiches Bewegen der Führungselemente in der Führungsschiene entlang der Führungsbahn, also mit gleichen der Geschwindigkeit in die gleiche Richtung, bewirkt eine Verschiebung der Anzeigeeinheit entlang der Führungsbahn der Führungsschienen und zum Beispiel parallel zur Längserstreckungsrichtung des Fahrzeugs im Innenraum des Fahrzeugs, und zwar ohne Veränderung der Neigung der Anzeigeeinheit.

Dagegen liefert eine Relativbewegung zwischen den ersten und zweiten Führungselementen bei entsprechender Anordnung der Führungselemente und der Koppelhebel in Bezug aufeinander und in Relation zur Anzeigeeinheit und zu den Führungsschienen zu einer Verschwenkbewegung, und zwar mit Translation der Schwenkachse, die zum Beispiel durch die ersten Führungselemente definiert wird, wenn die ersten Führungselemente bewegt werden, und mit feststehender Schwenkachse, wenn die ersten Führungselemente nicht bewegt werden und sich nur die zweiten Führungselemente bewegen.

Durch eine entsprechende Abstimmung der Bewegung der ersten und zweiten Führungselemente ist also in gesteuerter oder geregelter Weise eine Verschiebung der Anzeigeeinheit, eine Verschwenkung der Anzeigeeinheit oder eine Kombination dieser Bewegungsformen im Innenraum eines zu Grunde liegenden Fahrzeugs möglich.

Gemäß einem anderen Aspekt der vorliegenden Erfindung wird entsprechend auch ein Fahrzeug geschaffen. Dieses weist eine Karosserie, einen durch die Karosserie gebildeten Innenraum mit einem Dachhimmel sowie eine am oder im Dachhimmel angebrachte und erfindungsgemäß ausgestaltete Anzeigeeinrichtung auf.

Bei einer besonders bevorzugten Ausgestaltungsform des erfindungsgemäßen Fahrzeugs sind zwei Führungsschienen der Anzeigeeinrichtung am oder im Dachhimmel derart angebracht, dass sie sich mit gleicher Länge bündig und parallel zueinander in einer Längserstreckungsrichtung des Fahrzeugs erstrecken, insbesondere an oder - in Bezug auf eine Querstreckungsrichtung des Fahrzeugs - in außen gelegenen Bereichen des Dachhimmels.

Des Weiteren sind zusätzlich oder alternativ zwei erste Führungselemente der Anzeigeeinrichtung derart in den oder in die Führungsschienen aufgenommen, dass eine entsprechende erste Querkante der Anzeigeeinheit der Anzeigeeinrichtung, an deren Bereich die ersten Führungselemente angebracht sind, parallel zur Querstreckungsrichtung des Fahrzeugs und in Bezug auf die Längserstreckungsrichtung des Fahrzeugs in Richtung auf eine dem Fond des Fahrzeugs zugewandte Seite angeordnet ist.

Ferner ist es zusätzlich oder alternativ vorgesehen, dass zwei zweite Führungselemente der Anzeigeeinrichtung derart in den Führungsschienen aufgenommen sind, dass eine der ersten Querkante gegenüberliegende zweite Querkante der Anzeigeeinheit der Anzeigeeinrichtung in Richtung auf eine vom Fond des Fahrzeugs abgewandte Seite zu angeordnet ist.

### Kurzbeschreibung der Figuren

Weitere Einzelheiten, Merkmale und Vorteile der Erfindung ergeben sich aus der nachfolgenden Beschreibung und den Figuren.

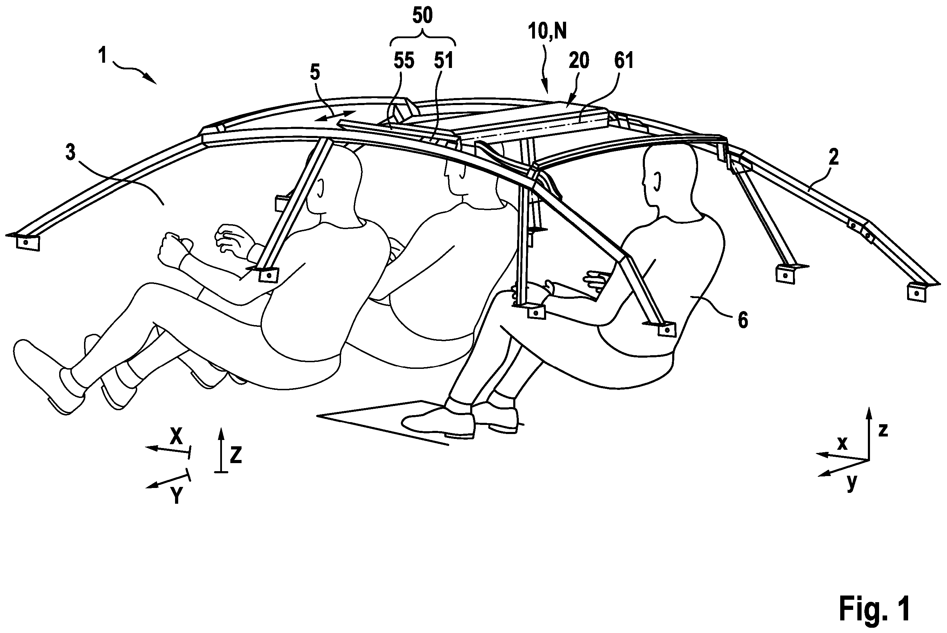

- Figuren 1 bis 4: zeigen in schematischer und perspektivischer Seitenansicht eine Ausführungsform des erfindungsgemäßen Fahrzeugs, welches mit einer Ausführungsform der erfindungsgemäßen Anzeigeeinrichtung ausgestattet ist, wobei die Anzeigeeinheit in verschiedenen Stellungen im Innenraum des Fahrzeugs angeordnet ist.

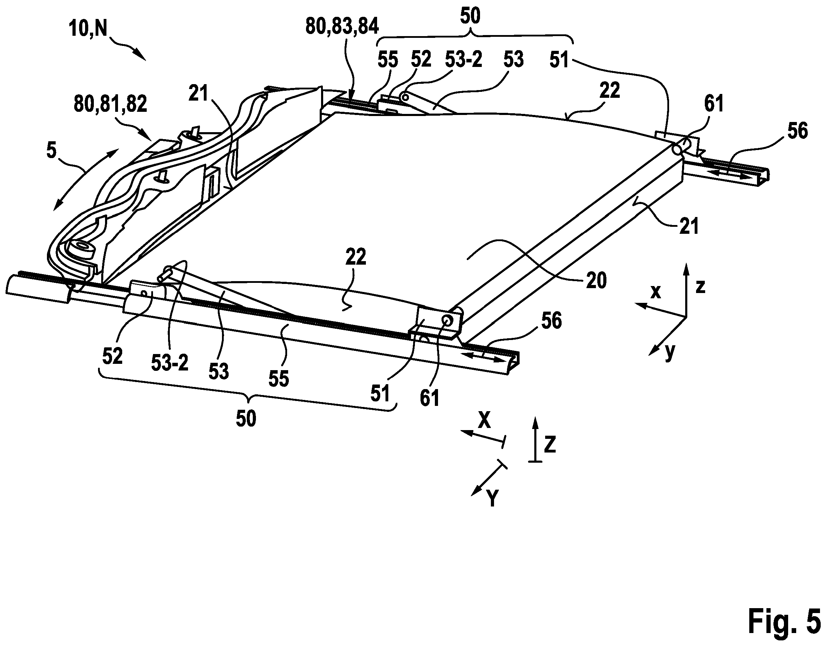

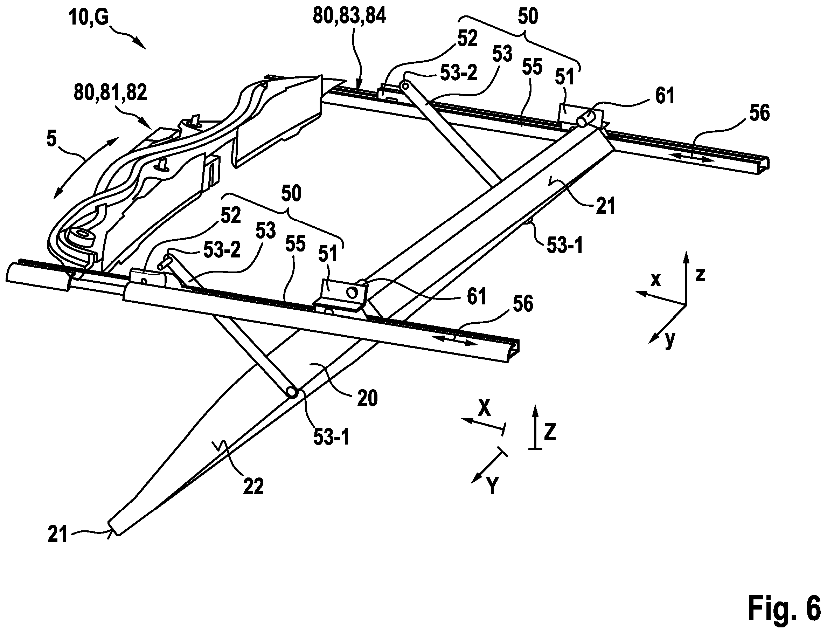

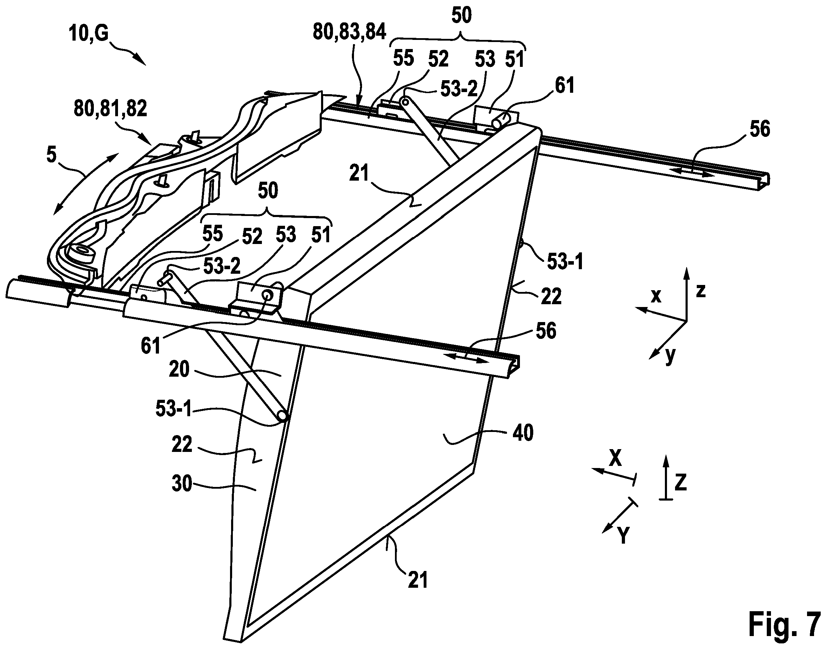

- Figuren 5 bis 7: zeigen isoliert in schematischer und perspektivischer Seitenansicht eine andere Ausführungsform der erfindungsgemäßen Anzeigeeinrichtung in verschiedenen Stellungen.

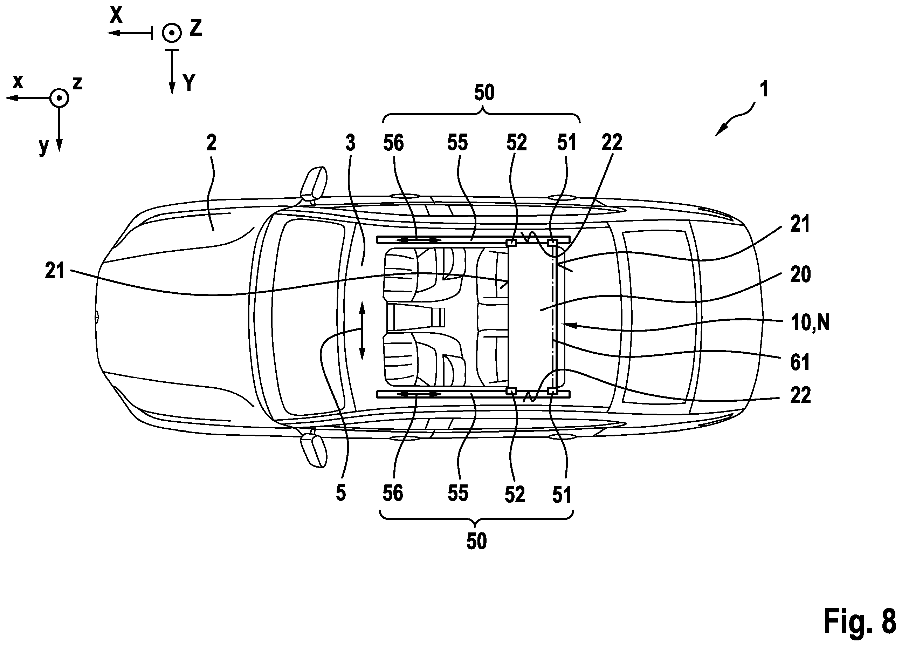

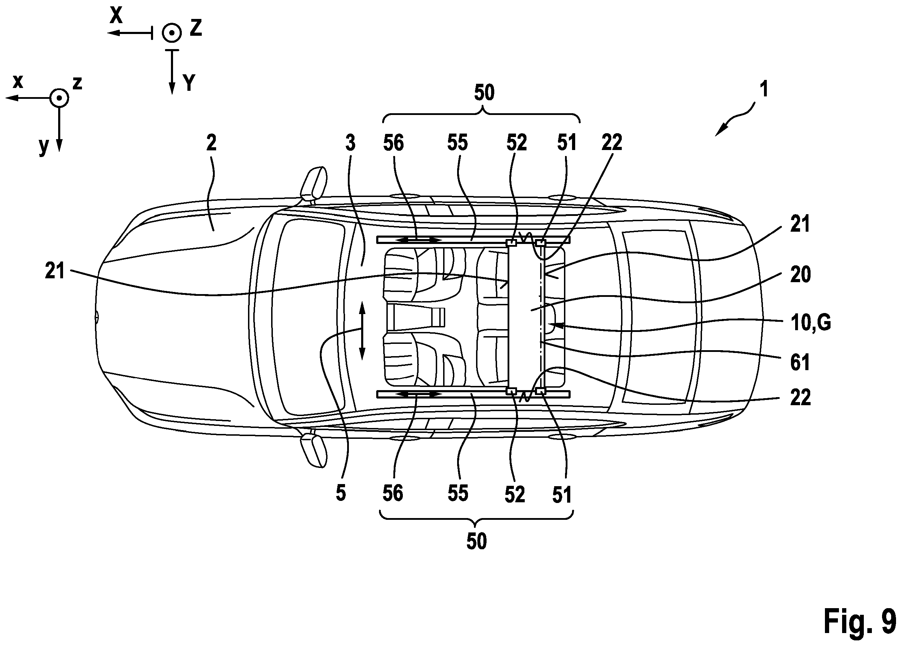

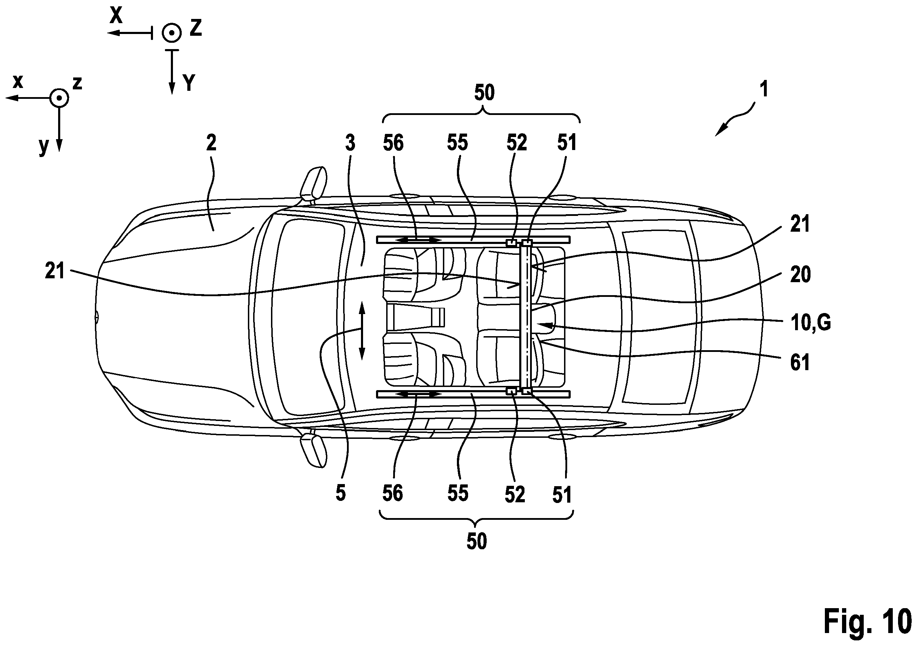

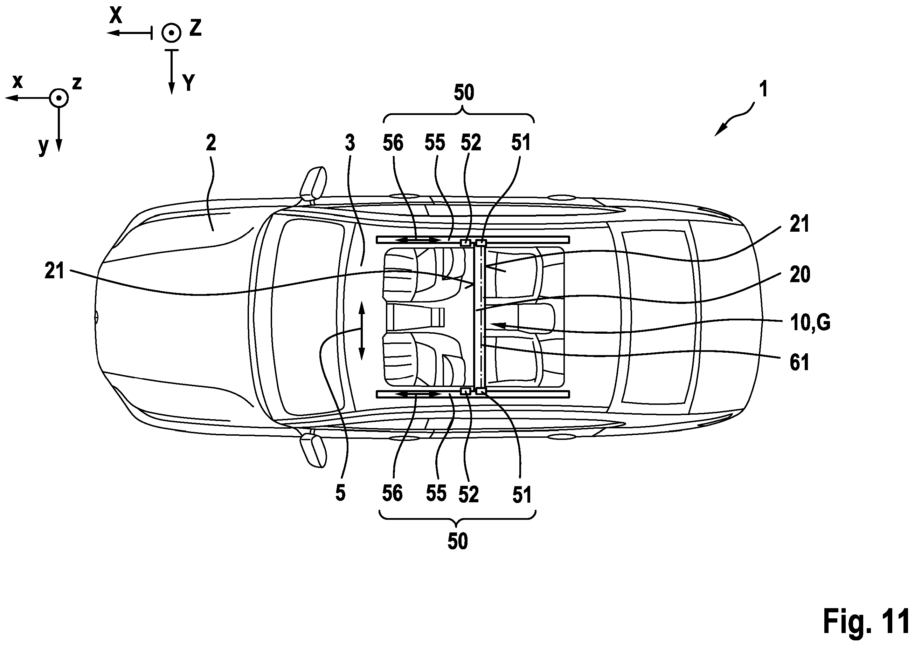

- Figuren 8 bis 11: zeigen in schematischer und perspektivischer Draufsicht eine weitere Ausführungsform des erfindungsgemäßen Fahrzeugs, welches mit einer Ausführungsform der erfindungsgemäßen Anzeigeeinrichtung ausgestattet ist, wobei die Anzeigeeinheit in verschiedenen Stellungen im Innenraum des Fahrzeugs angeordnet ist.

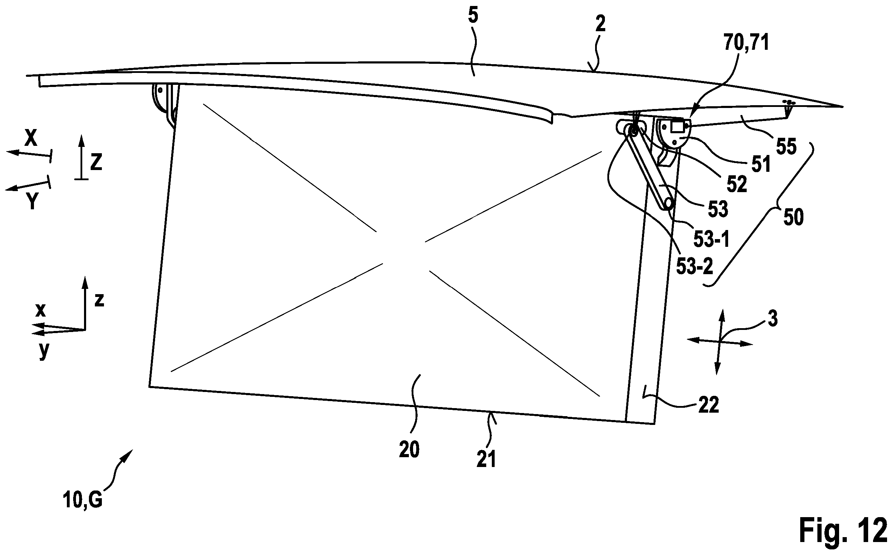

- Figur 12: zeigt in schematischer und perspektivischer Seitenansicht eine andere Ausführungsform der erfindungsgemäßen Anzeigeeinheit mit einer Rutschkupplung in einer Gebrauchsstellung.

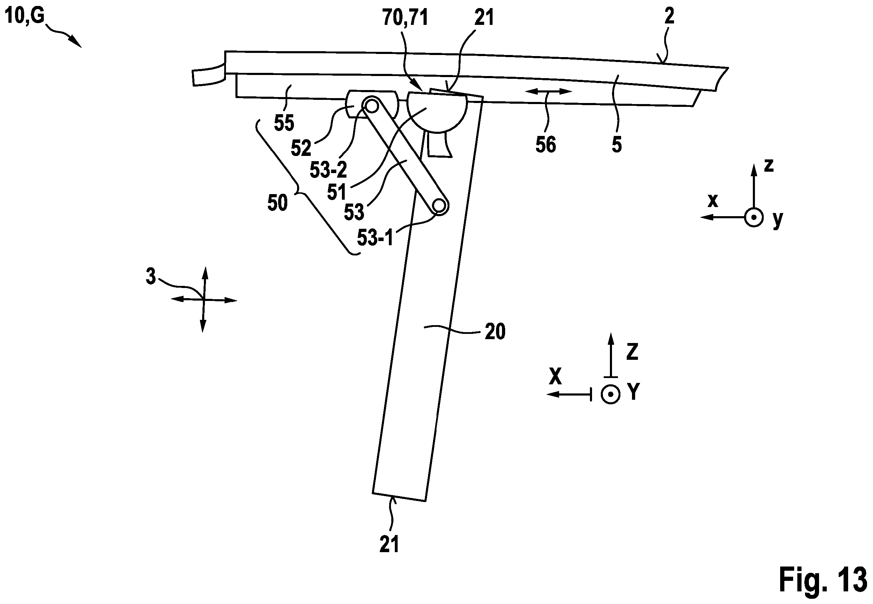

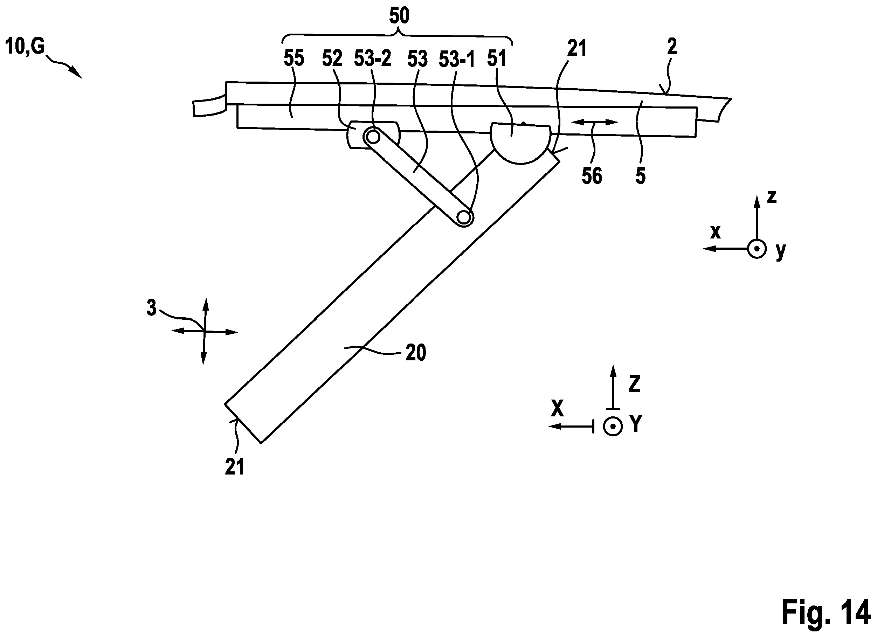

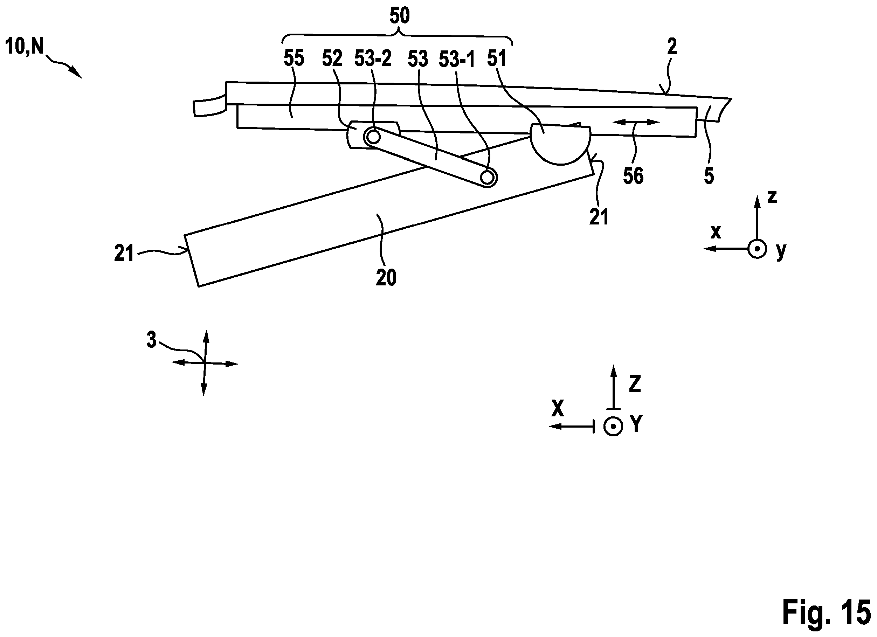

- Figuren 13 bis 15: zeigen in schematischer Seitenansicht die in Figur 12 dargestellte Ausführungsform der erfindungsgemäßen Anzeigeeinheit in verschiedenen Stellungen im Innenraum eines erfindungsgemäßen Fahrzeugs, die beim Auftreten ein vorgegebenes Mindestmaß übersteigender Verzögerungen eingenommen werden.

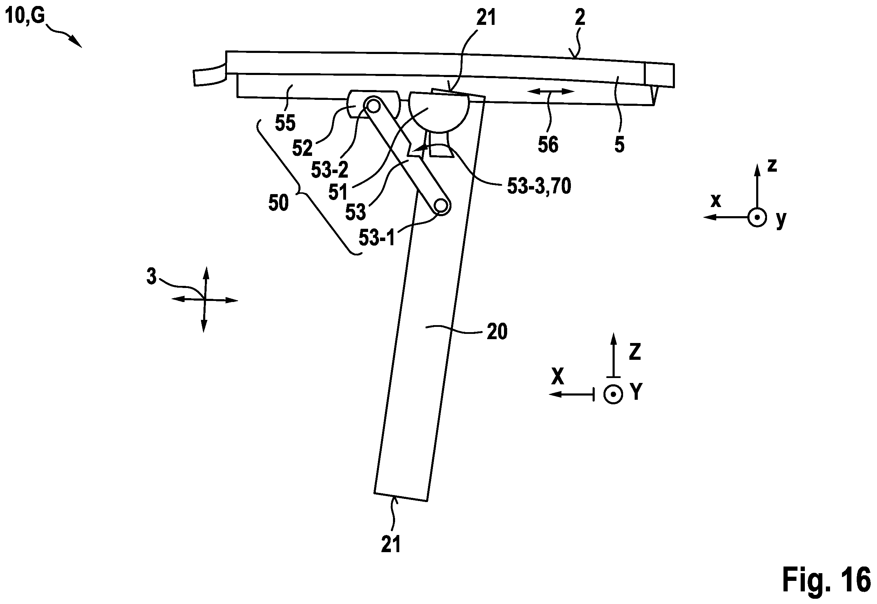

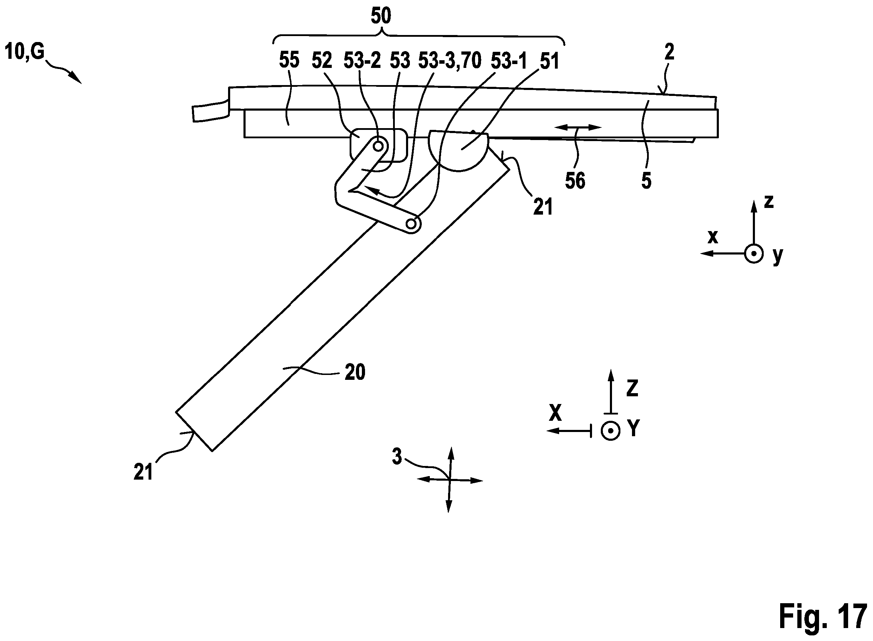

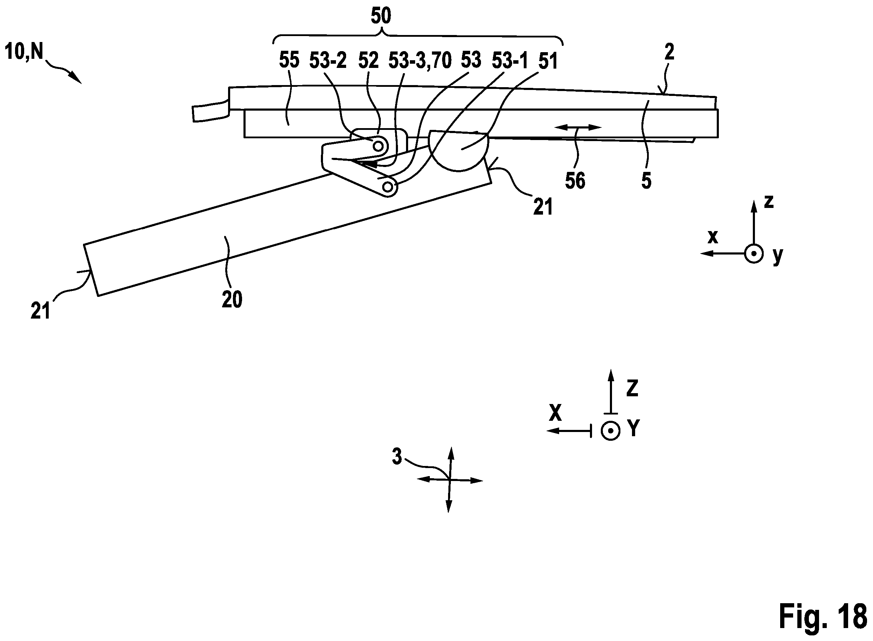

- Figuren 16 bis 18: zeigen in schematischer Seitenansicht eine andere Ausführungsform der erfindungsgemäßen Anzeigeeinheit, bei welcher der Koppelhebel eine Sollknickstelle aufweist, und zwar in verschiedenen Stellungen im Innenraum eines erfindungsgemäßen Fahrzeugs, die beim Auftreten ein vorgegebenes Mindestmaß übersteigender Verzögerungen eingenommen werden.

Nachfolgend werden unter Bezugnahme auf die Figuren 1 bis 18 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Die Figuren 1 bis 4 zeigen in schematischer und perspektivischer Seitenansicht eine Ausführungsform des erfindungsgemäßen Fahrzeugs 1, welches mit einer Ausführungsform der erfindungsgemäßen Anzeigeeinrichtung 10 ausgestattet ist, wobei die Anzeigeeinheit 20 der Anzeigeeinrichtung 10 in verschiedenen Stellungen N, G im Innenraum 3 des Fahrzeugs 1 angeordnet ist.

In sämtlichen Figuren und auch in den Figuren 1 bis 4 ist das erfindungsgemäße Fahrzeug 1 schematisch dargestellt durch Komponenten einer Karosserie 2, welche einen Innenraum 3 des Fahrzeugs 1 umgeben und einen Dachhimmel 5 definieren.

Das jeweilige Fahrzeug 1 erstreckt sich in einer Längserstreckungsrichtung X parallel zur x-Richtung, in einer Querstreckungsrichtung Y parallel zur y-Richtung sowie in einer Höhenrichtung Z parallel zur z-Richtung, welche durch die jeweils angegebenen Dreibeine definiert sind.

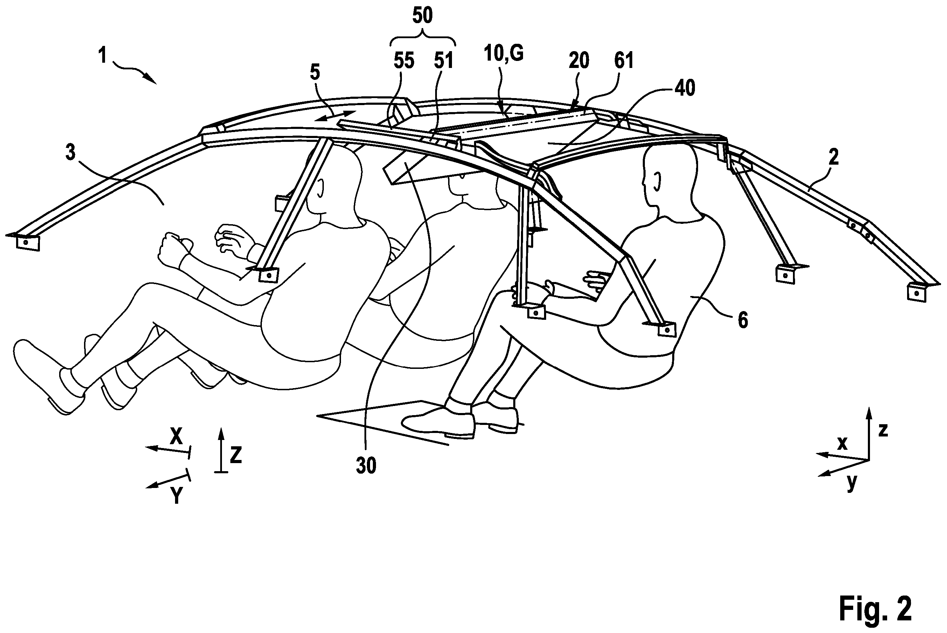

Eine jeweils dargestellte Anzeigeeinrichtung 10 wird in den Darstellungen der Figuren 1 bis 4 gebildet von der eigentlichen Anzeigeeinheit 20, zum Beispiel mit einem Träger 30, welcher ein Anzeigeelement 40, zum Beispiel einen Monitor oder einen Bildschirm, trägt, wie dies aus den Figuren 2 bis 4 hervorgeht. Die Anzeigeeinheit 20 ist hier von im Wesentlichen rechteckiger Gestalt mit längeren Querkanten 21 parallel zur Querstreckungsrichtung Y des Fahrzeugs 1 und mit kürzeren Längskanten 22 parallel zur Längserstreckungsrichtung X des Fahrzeugs 1.

Ferner ist Bestandteil der erfindungsgemäßen Anzeigeeinrichtung eine Bewegungseinheit 50. Diese wird bei der in den Figuren 1 bis 4 dargestellten Ausführungsform gebildet von zwei Führungsschienen 55, zwei ersten Führungselementen 51, zwei zweiten Führungselementen 52 und zwei Koppelhebeln 53.

Die Führungsschienen 55 sind bei dieser Ausführungsform identisch ausgebildet, besitzen eine lineare Gestalt mit gleicher Länge, sind parallel zueinander und bündig am Dachhimmel 5 angeordnet und bilden jeweils eine Führungsbahn 56. Grundsätzlich sind auch gekrümmte Führungsschienen 55 denkbar. Die Führungsschienen 55 erstrecken sich bei der Ausführungsform der Figuren 1 bis 4 in der Längserstreckungsrichtung X des Fahrzeugs 1. Sie befinden sich in der Querstreckungsrichtung Y voneinander beabstandet an den Seiten des Dachhimmels 5, also insbesondere im Übergang vom Dach zur Fahrzeugseite.

Die ersten und zweiten Führungselemente 51 bzw. 52 sind als erste bzw. zweite Gleiter ausgebildet und dazu eingerichtet in einer jeweiligen Führungsschiene 55 aufgenommen und darin bewegt zu werden oder sich darin entlang der jeweiligen Führungsbahn 56 zu bewegen.

Im Bereich einer ersten Querkante 21 der Anzeigeeinheit 20 sind die ersten Führungselemente 51 derart drehbar gelagert an der Anzeigeeinheit 20 angebracht, dass dadurch eine Schwenkachse oder Drehachse 61 der Anzeigeeinheit 20 definiert wird. Die Montage erfolgt insbesondere an derjenigen Querkante 21 der Anzeigeeinheit 20, welche auf einer Seite liegt, die dem Fond eines Fahrzeugs 1 zugeordnet ist und die bei Montage der Anzeigeeinheit 20 am Fahrzeug 1 der Seite des Fonds des Fahrzeugs 1 zugewandt ist. Die Montage der ersten Führungselemente 51 erfolgt vorzugsweise in der Nachbarschaft zu den gegenüberliegenden Längskanten 22 der Anzeigeeinheit 20, insbesondere also quasi im Kreuzungsbereich der Längskanten 22 und der Querkanten 21.

Beabstandet zur jeweiligen Montagestelle der ersten Führungselemente 51 an der Anzeigeeinheit 20 und somit beabstandet zur Drehachse 61 ist drehbar gelagert jeweils ein erstes Ende 53-1 eines Koppelhebels 53 an der Anzeigeeinheit 20 angebracht, insbesondere im Bereich einer Längsachse 22. Das bedeutet insbesondere, dass an jeder Längsachse 22 ein Koppelhebel 53 mit seinem ersten Ende drehbar im Bereich der Längsachse 22 an der Anzeigeeinheit 20 angebracht ist, wobei die Abstände der Montagestellen von der Drehachse 61 insbesondere gleich ist.

Das zweite Ende 53-2 eines jeweiligen Koppelhebels 53 ist drehbar gelagert an einem zweiten Führungselement 52 angebracht.

Mit der so gewählten Anordnung aus ersten Führungselementen 51, zweiten Führungselementen 52, Koppelhebeln 53 und Führungsschienen 55 mit Führungsbahnen 56 ergibt sich beim Bewegen der Führungselemente 51, 52 in den Führungsschienen 55 die Möglichkeit, zwischen einer Nichtgebrauchsstellung N und einer oder mehreren Gebrauchsstellungen G der Anzeigeeinheit 20 zu wechseln, wobei verschiedene Neigungswinkel zum Dachhimmel 5 und/oder verschiedene laterale Positionen entlang der Führungsschienen 55 und somit bei Montage in einem Fahrzeug 1 entlang der Längserstreckungsrichtung X des Fahrzeugs 1 eingenommen werden können.

In der Figur 1 befindet sich die Anzeigeeinheit 20 in einer Nichtgebrauchsstellung N, nämlich in einem Zustand, bei welchem die Anzeigeeinheit im Wesentlichen parallel zum Dachhimmel 5 ausgerichtet ist.

Im Übergang zu dem in Figur 2 gezeigten Zwischenzustand wird die Anzeigeeinheit 50 durch entsprechendes Bewegen der ersten und zweiten Führungselemente 51, 52 in der Führungsschiene 55 vom Dachhimmel 5 in den Fahrgastraum 3 hinein abgeschwenkt, um eine erste Gebrauchsstellung G einzunehmen.

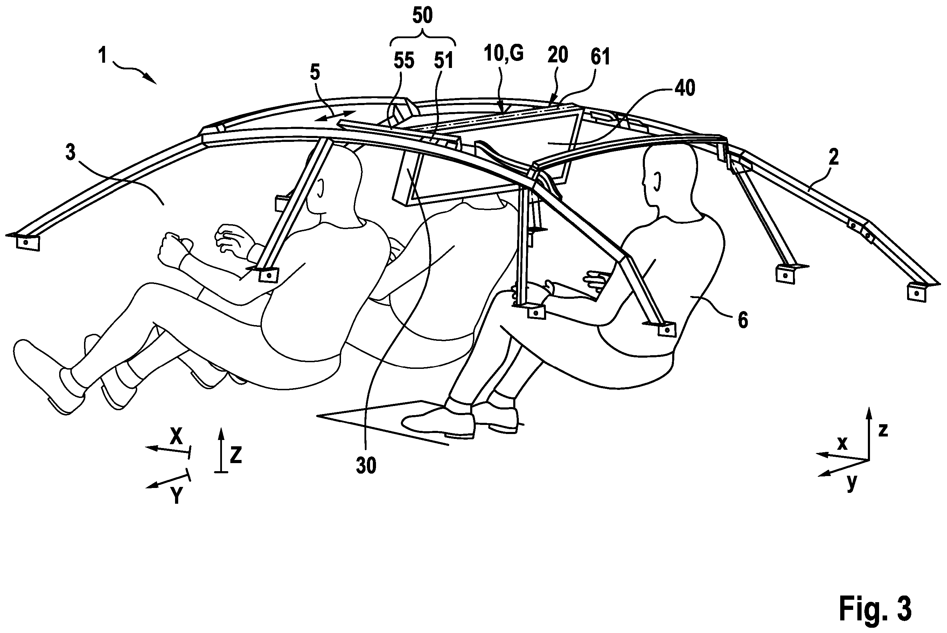

Im Übergang zu dem in Figur 3 dargestellten Zwischenzustand wird die Anzeigeeinheit 20 zu einem größeren Winkel zum Dachhimmel 5 abgeschwenkt und in eine stärker senkrecht ausgerichtete weitere Gebrauchsstellung G überführt.

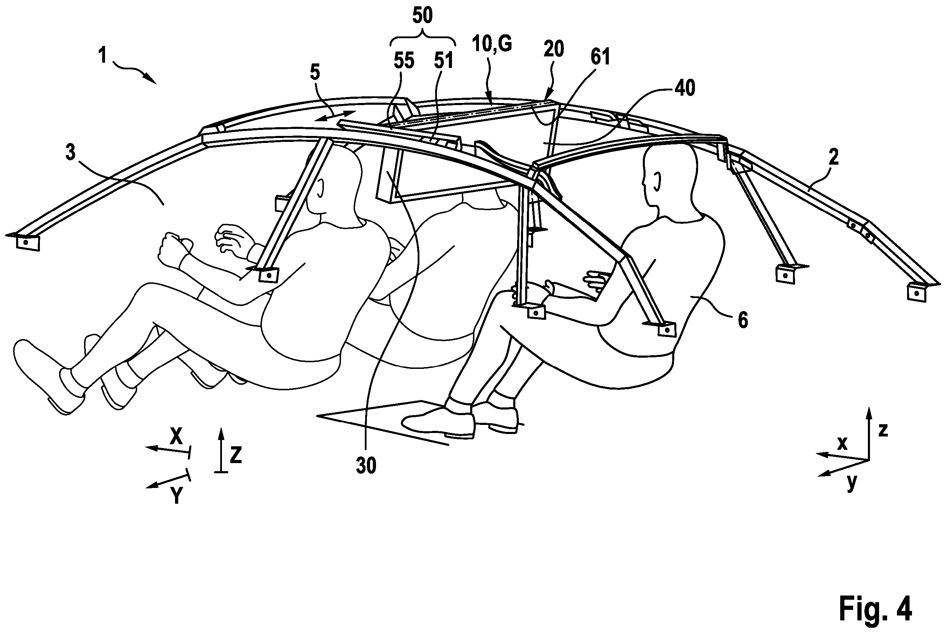

Im Übergang zu dem in Figur 4 dargestellten Zwischenzustand wird dann durch simultanes Bewegen der ersten und zweiten Führungselemente 51 bzw. 52 und insbesondere durch Bewegung mit gleicher Geschwindigkeit und gleicher Strecke ein reines Verschieben ohne Änderung des Neigungswinkels bewirkt, so dass der Blickabstand eines hinten sitzenden Insassen 6 des Fahrzeugs angepasst und insbesondere vergrößert werden kann. Im diesem Fall wurde im Übergang zu dem in Figur 4 gezeigten Zwischenzustand die Anzeigeeinheit in den vorderen Bereich des Fahrzeugs 1 bewegt.

Die vorangehend beschriebene Struktur der Anzeigeeinrichtung 10 mit Anzeigeeinheit 20 und Bewegungseinrichtung 50 auch auf der Grundlage der weiteren Figuren 5 bis 18wird weiter verdeutlicht.

Die Figuren 5 bis 7 zeigen in schematischer und perspektivischer Seitenansicht eine isoliert eine andere Ausführungsform der erfindungsgemäßen Anzeigeeinrichtung 10 in verschiedenen Stellungen N, G.

Es ist eine ähnliche Situation, wie sie in den Figuren 1 bis 4 dargestellt ist, wobei hier jedoch der Fokus auf den einzelnen Elementen der Anzeigeeinrichtung 10 und auf die Nichtgebrauchsstellung N gemäß Figur 5 und die beiden Gebrauchsstellungen gemäß den Figuren 6 und 7 gerichtet ist.

Zu erkennen ist wieder der Aufbau der Anzeigeeinheit 20 mit den Querkanten 21 und den Längskanten 22, dem Träger 30 und dem eigentlichen Anzeigeelement 40. Jeweilige Koppelhebel 53 sind mit ersten Enden 53-1 an entsprechend gleicher Position an den Längskanten 22 drehbar angebracht. Die zweiten Enden 53-2 der Koppelhebel sind drehbar an zweiten Führungselementen 52, die in der Schiene 55 laufen können, befestigt. Die ersten Führungselemente 51 sind drehbar im Kreuzungsbereich zwischen der dem Fond zugeordneten Querkante 21 und den Längskanten 22 angebracht, um so eine Drehachse oder Schwenkachse 61 der Anzeigeeinheit 20 zu definieren.

Schematisch angedeutet ist eine Antriebseinheit 80, mit welcher die ersten und zweiten Führungselemente 51 und 52, zum Beispiel als erste und zweite Gleiter, in den Schienen 55 entlang den Führungsbahnen 56 bewegt werden können, um ein gesteuertes und/oder geregeltes Verschwenken und/oder Verschieben der Anzeigeeinheit 20 zu bewirken.

Die Antriebseinheit 80 kann zum Beispiel aus einem ersten Antrieb 81, etwa einem ersten Motor, für die ersten Führungselemente 51 bestehen, wobei die Kopplung zum Motor über ein erstes Antriebsmittel 83, zum Beispiel in Form eines Bürstenkabels oder Helixkabels, erfolgt. Entsprechend kann die Antriebseinheit 80 erfindungsgemäß einen zweiten Antrieb 82, zum Beispiel einen zweiten Motor, für die zweiten Führungselemente 52 aufweisen, wobei die Kopplung zum Motor entsprechend über ein zweites Antriebsmittel 84, zum Beispiel ebenfalls in Form eines Bürstenkabels oder eines Helixkabels, erfolgt. Auf diese Weise können die ersten und zweiten Führungselemente 51 bzw. 52 autonom, d.h. unabhängig voneinander, aber auch gemeinsam bewegt werden, um Abstände und Neigungen der Anzeigeeinheit 20 im Innenraum 3 des Fahrzeugs 1 frei zu wählen.

Die Figuren 8 bis 11 zeigen in schematischer und perspektivischer Draufsicht eine weitere Ausführungsform des erfindungsgemäßen Fahrzeugs 1, welches mit einer Ausführungsform der erfindungsgemäßen Anzeigeeinrichtung 10 ausgestattet ist, wobei die Anzeigeeinheit 20 in verschiedenen Stellungen N und G im Innenraum 3 des Fahrzeugs 1 angeordnet ist.

Im Havariefall und insbesondere bei Frontalzusammenstößen und bei Auffahrunfällen ist es wichtig, dass die erfindungsgemäße Anzeigeeinrichtung 10 so ausgebildet ist, dass eine in einer Gebrauchsstellung G ausgeschwenkte Anzeigeeinheit 20 umgehend in die Nichtgebrauchsstellung N zurück geschwenkt wird, damit beim Auftreten ein vorgegebenes Mindestmaß übersteigender Verzögerungen die Anzeigeeinheit 20 den Innenraum 3 des Fahrzeugs 1 auf leichte Weise freigibt.

Dazu werden gemäß eines weiteren Aspekts der vorliegenden Erfindung verschiedene Sicherheitseinrichtungen 70 an der Anzeigeeinrichtung 10 ausgebildet.

Entsprechend zeigt Figur 12 in schematischer und perspektivischer Seitenansicht eine andere Ausführungsform der erfindungsgemäßen Anzeigeeinheit 10 mit einer Rutschkupplung 71 als Sicherheitseinrichtung 70 in einer Gebrauchsstellung G.

In diesem Fall ist die Rutschkupplung 71 als Komponente zwischen den die Drehachse 61 definierenden ersten Führungselementen 51 und den Führungsschienen 55 ausgebildet.

Die Figuren 13 bis 15 zeigen in schematischer Seitenansicht die in Figur 12 dargestellte Ausführungsform der erfindungsgemäßen Anzeigeeinheit 10 in verschiedenen Stellungen N und G im Innenraum 3 eines erfindungsgemäßen Fahrzeugs 1, die im Havariefall eingenommen werden.

Auf Grund der Ausgestaltung der ersten Führungselemente 51 mit Rutschkupplung 71 als Teil einer Sicherheitseinheit 70 erfolgt über die Kopplung mit dem Koppelhebel 53 und gesperrten zweiten Führungselementen 52 beim Auftreten einer ein Mindestmaß überschreitenden Verzögerung eine Kraftübertragung auf die ersten Führungselemente 51, so dass beim Überschreiten einer Grenzkraft, die in Beziehung gesetzt werden kann mit einer Grenzverzögerung oder Grenzbeschleunigung, zum Beispiel mit einem Wert von 5 g oder darüber, die ersten Führungselemente 51 in Bewegung geraten und sich in den Führungsschienen 55 in Richtung auf den Fond des Fahrzeugs 1 bewegen, so dass die Anzeigeeinheit 20, wie dies in den Figuren 13 bis 15 dargestellt ist, ausweichend in die Nichtgebrauchsstellung N vorklappt, so dass der Innenraum 3 des Fahrzeugs 1 auf leichte Weise und schnell freigegeben wird.

Die Figuren 16 bis 18 zeigen in schematischer Seitenansicht eine andere Ausführungsform der erfindungsgemäßen Anzeigeeinheit, welche eine Sollknickstelle 53-3 am oder im Koppelhebel 53 als Sicherheitseinheit 70 aufweist, und zwar in verschiedenen Stellungen im Innenraum 3 eines erfindungsgemäßen Fahrzeugs 1, die im Havariefall eingenommen werden.

Die Sollknickstelle 53-3 fungiert somit als dezidierte mechanische Schwachstelle, die beim Überschreiten einer Losbrechkraft, nachgibt, so dass der Koppelhebel seine lineare Ursprungsgestalt verlässt, einknickt und damit bei gesperrtem oder gebremstem ersten Führungselementen 51 und insbesondere auch Bewegung der zweiten Führungselemente 52 aus dem Fond des Fahrzeugs 1 hinaus ein Vorklappen der Anzeigeeinheit 20 ermöglicht, so dass die Anzeigeeinheit 20 in Richtung auf den Dachhimmel 5 und somit in die Nichtgebrauchsstellung N vorschwenkt, so dass der Innenraum 3 des Fahrzeugs 1 unmittelbar freigegeben wird.

Diese und weitere Merkmale und Eigenschaften der vorliegenden Erfindung werden an Hand der folgenden Darlegungen weiter erläutert:
Es sind bereits aus dem öffentlichen Nahverkehr und diversen anderen Fahrzeugen Klappmonitore im Dachbereich bekannt. Diese klappen über ein Eingelenkscharnier an der Vorderkante des Monitors den Monitor in eine vom Dach abgeschwenkte Stellung, zum Beispiel in eine senkrechte Stellung. Eine Längsverstellbarkeit ist nicht vorgesehen.

Die Klappbewegung führt den Monitor dabei dicht an den Köpfen der Betrachter vorbei. Durch eine fehlende Einstellmöglichkeit in der Längsposition kann der Monitor nicht an den Gebrauch, zum Beispiel für eine Bedienung durch Berührung im Vergleich zu einer Kinoposition mit maximalem Abstand zwischen Monitor und Auge des Betrachters, eingestellt werden.

Im Fahrzeug 1 wird erfindungsgemäß im Bereich des Dachhimmels 5 seitlich links wie rechts ein Schienensystem mit Führungsschienen 55 montiert, wobei sich die Führungsschienen 55 im Wesentlichen in einer Längserstreckungsrichtung X des Fahrzeugs 1 erstrecken. Auf jeder Seite sind bei den in den Figuren gezeigten Ausführungsformen der vorliegenden Erfindung zwei Gleiter als erste und zweite Führungselemente 51 bzw. 52 durch entsprechende Elektromotoren als Antriebe 81, 82 antreibbar.

Der im Fahrzeug hintere Gleiter, also insbesondere der erste Gleiter 51, nimmt die Drehachse 61 des Monitors als Anzeigeeinheit 20 auf und/oder definiert die Drehachse 61.

Der jeweils vordere Gleiter als zweites Führungselement 52 im Sinne der vorliegenden Erfindung nimmt oder bildet eine drehbare Ankopplung an einen Koppelhebel 53 auf. Ein Verfahren oder Bewegen der hinteren oder ersten Gleiter 51, bei Stillstand der vorderen oder zweiten Gleiter 52, führt über die Relativbewegung der Gleiter 51 und 52 - hierbei bei stehendem zweiten Gleiter 52 - zu einem Ausklappen bzw. zu einer Neigungsverstellung.

Durch den Koppelhebel 53 senkt sich der Monitor Anzeigeeinheit 20 auf der dem Kopf eines Insassen abgewandten Seite ab, so dass ein maximaler Freiraum zwischen dem Kopf des Insassen und Monitor als Anzeigeeinheit 20 gewahrt wird.

Fahren vorderer und hinterer Gleiter 51 und 52 synchron, das heißt mit einem identischen Bewegungsumfang und ohne relative Bewegung zwischen den Gleitern als ersten und zweiten Führungselementen 51 und 52 im Sinne der vorliegenden Erfindung, so kommt es zu einer reinen Längsverstellung, also insbesondere parallel zur Längserstreckungsrichtung X des Fahrzeugs 1, ohne dass sich die Neigung des Monitors als Anzeigeeinheit 20 ändert.

Die erfindungsgemäße Kinematik, die in der beschriebenen Art und Weise gebildet wird durch das Zusammenwirken der ersten und zweiten Führungselemente oder Gleiter 51, 52, der Führungsschienen 55 mit Führungsbahn 56 und der Koppelhebel 53, ermöglich ein Ein- und Ausklappen, d.h. ein Einnehmen einer Gebrauchsstellung oder einer Nichtgebrauchsstellung, ein Verstellen der Neigung und/oder eine Verstellbarkeit der Position der Anzeigeeinheit 20 in der Längserstreckungsrichtung X des Fahrzeugs 1.

Das Absenken oder Abschwenken des Monitors als Anzeigeeinheit 20 erfolgt mit einem maximal möglichen Freigang oder Freiraum zwischen dem Kopf eines Insassen und dem Monitor als Anzeigeeinheit 20. Hierdurch reduziert sich die Verletzungsgefahr.

Herkömmlicherweise kann ein Monitor als Anzeigeeinheit nur im freien Bereich einer Trajektorienanalyse positioniert werden. Folglich sind herkömmlicherweise nur vergleichsweise räumlich geringer ausgedehnte, also kleine Monitore möglich, welche darüber hinaus gegebenenfalls auch ergonomisch eher ungünstig montiert werden müssen.

In der erfindungsgemäß vorgeschlagenen Klappkinematik für den Monitor als Anzeigeeinheit 20 kann zum Beispiel eine Sollversagensstelle, etwa im Sinne einer Sollknickstelle, mit einem vordefinierbaren oder einstellbaren Kraftniveau vorgesehen werden.

Weiterhin sind die geometrische Lage des Schwerpunkts des Monitors als Anzeigeeinheit 20, eine Kinematik und eine Sollversagensstelle so anbringbar, dass die Anzeigeeinrichtung 10 beim Auftreten einer ein vorgegebenes Mindestmaß übersteigenden Verzögerung den Monitor durch seine Massenträgheit aus dem Innenraum 3 des Fahrzeugs 1 entfernt.

### Bezugszeichenliste:

- 1: Fahrzeug
- 2: Karosserie
- 3: Innenraum
- 5: Dachhimmel
- 6: Insasse hinten

- 10: Anzeigeeinrichtung
- 20: Anzeigeeinheit
- 21: Querkante
- 22: Längskante
- 30: Träger
- 40: Anzeigeelement, Monitor, Bildschirm
- 50: Bewegungseinheit
- 51: (erstes) Führungselement, (erster) Gleiter
- 52: (zweites) Führungselement, (zweiter) Gleiter
- 53: Koppelhebel
- 53-1: (erstes) Ende des Koppelhebels 53 (an der Anzeigeeinheit 20)
- 53-2: (zweites) Ende des Koppelhebels 53 (an einem zweiten Führungselement 52)
- 55-3: Knickstelle
- 55: Führungsschiene
- 56: Führungsbahn
- 60: Schwenkeinheit
- 61: Schwenkachse
- 70: Sicherheitseinheit
- 71: Rutschkupplung
- 80: Antriebseinheit
- 81: (erster) Antrieb/Motor für erstes Führungselement 51
- 82: (zweiter) Antrieb/Motor für zweites Führungselement 52
- 83: (erstes) Antriebsmittel/Bürstenkabel/Helixkabel für erstes Führungselement 51
- 84: (zweites) Antriebsmittel/Bürstenkabel/Helixkabel für zweites Führungselement 52

- G: Gebrauchsstellung
- N: Nichtgebrauchsstellung
- x: Raumrichtung
- X: Längserstreckungsrichtung des Fahrzeugs 1
- y: Raumrichtung
- Y: Querstreckungsrichtung des Fahrzeugs 1
- z: Raumrichtung
- Z: Höhenerstreckungsrichtung des Fahrzeugs 1

## Patentansprüche

1. Anzeigeeinrichtung (10) für den Innenraum (3) eines Fahrzeugs (1),
mit:
- einer Anzeigeeinheit (20), welche zum optischen Anzeigen von Information eingerichtet ist, und
- einer Bewegungseinrichtung (50), welche eingerichtet ist, die Anzeigeeinheit (20), insbesondere steuerbar, zwischen einer Nichtgebrauchsstellung (N), parallel zu einem Dachhimmel (5) des Fahrzeugs (1), und einer Gebrauchsstellung (G), insbesondere abgeschwenkt vom Dachhimmel (5) des Fahrzeugs (1), zu überführen und, insbesondere steuerbar, in der Nichtgebrauchsstellung (N) und/oder der Gebrauchsstellung (G) zu haltern,
bei welcher die Bewegungseinrichtung (50)
(i) mit ersten Führungselementen (51), welche direkt und drehbar gelagert an der Anzeigeeinheit (20) zur Definition einer Schwenkachse (61) zum Verschwenken der Anzeigeeinheit (20) zumindest zwischen der Nichtgebrauchsstellung (N) und der Gebrauchsstellung (G) angebracht sind,
(ii) mit zweiten Führungselementen (52), welche jeweils über genau einen Koppelhebel (53) der Anzeigeeinrichtung (10) mit der Anzeigeeinheit (20) in mechanischer Wirkverbindung gekoppelt sind, indem jeweils
- ein erstes Ende (53-1) eines jeweiligen Koppelhebels (53) an der Anzeigeeinheit (20) drehbar gelagert angebracht ist und
- ein zweites Ende (53-2) des jeweiligen Koppelhebels (53) an einem zweiten Führungselement (52) drehbar gelagert angebracht ist, und
(iii) mit Führungsschienen (55) zur Anbringung am Dachhimmel (5), mit einer Führungsbahn (56), zur Aufnahme der ersten und zweiten Führungselemente (51, 52) und zu deren Bewegung darin entlang der Führungsbahn (56)
ausgebildet ist.

2. Anzeigeeinrichtung (10) nach Anspruch 1, bei welcher die Koppelhebel (53) der zweiten Führungselemente (52):
- als Paar,
- zueinander gleich oder im Wesentlichen gleich,
- mit gleicher Länge,
- linear oder im Wesentlichen linear,
- zueinander parallel ausgerichtet und/oder
- zueinander bündig ausgerichtet
ausgebildet sind.

3. Anzeigeeinrichtung (10) nach Anspruch 1, bei welcher eine Position einer Montagestelle eines ersten Endes (53-1) eines Koppelhebels (53) an der Anzeigeeinheit (20) jeweils
- von einer Position einer Montagestelle eines zugeordneten ersten Führungselements (51) räumlich beabstandet ist und/oder
- an einer oder im Bereich einer Längskante (22) der Anzeigeeinheit (20) angeordnet ist.

4. Anzeigeeinrichtung (10) nach einem der vorangehenden Ansprüche, bei welcher die ersten Führungselemente (51) und/oder die zweiten Führungselemente (52)
- untereinander oder insgesamt gleich oder im Wesentlichen gleich
- als Gleiter und/oder - zu einer gleitenden Bewegung in einer jeweiligen Führungsschiene (55) eingerichtet
ausgebildet sind.

5. Anzeigeeinrichtung (10) nach einem der vorangehenden Ansprüche, bei welcher
- die ersten Führungselemente (51) an einer oder im Bereich einer ersten Querkante (21) und/oder einer Längskante (22) der Anzeigeeinheit (20) angebracht sind und/oder
- im am zugeordneten Fahrzeug (1) montierten Zustand der Anzeigeeinrichtung (10) die erste Querkante (21), insbesondere zusammen mit der Schwenkachse (61), parallel zu einer Querstreckungsrichtung (Y) des Fahrzeugs (1) ausgerichtet ist.

6. . Anzeigeeinrichtung (10) nach einem der vorangehenden Ansprüche, bei welcher die Anzeigeeinheit (20)
- mit im Wesentlichen rechteckiger Gestalt,
- im am zugeordneten Fahrzeug (1) montierten Zustand der Anzeigeeinrichtung (10) mit parallel zu einer Querstreckungsrichtung (Y) des Fahrzeugs (1) ausgerichteten Querkanten (21) und/oder
- im am zugeordneten Fahrzeug (1) montierten Zustand der Anzeigeeinrichtung (10) mit parallel zu einer Längserstreckungsrichtung (X) des zugeordneten Fahrzeugs (1) ausgerichteten Längskanten (22) ausgebildet ist.

7. Anzeigeeinrichtung (10) nach einem der vorangehenden Ansprüche, bei welcher die Führungsschienen (55)
- als Paar,
- zueinander gleich oder im Wesentlichen gleich,
- linear oder im Wesentlichen linear,
- zueinander parallel ausgerichtet,
- zueinander bündig ausgerichtet, insbesondere in Bezug auf ihre jeweiligen ersten und zweiten Enden (55-1, 55-2),
- im am zugeordneten Fahrzeug (1) montierten Zustand der Anzeigeeinrichtung (10) an einem oder im Bereich eines Dachhimmels (5) angebracht und/oder
- im am zugeordneten Fahrzeug (1) montierten Zustand der Anzeigeeinrichtung (10) parallel zu einer Längserstreckungsrichtung (X) des Fahrzeugs (1) ausgerichtet ausgebildet sind.

8. Anzeigeeinrichtung (10) nach einem der vorangehenden Ansprüche, bei welcher
- an oder in einem jeweiligen Koppelhebel (53) eine Sollknickstelle (53-3) mit vordefinierter Losbrechkraft als Sollknickkraft derart ausgebildet ist, dass beim Überschreiten der Sollknickkraft der Koppelhebel (53) an der Sollknickstelle (53-3) einknickt und dabei von einer nicht geknickten Normalform in eine geknickte Sicherheitsform übergeht,
- eine Rutschkupplung (71) und/oder Bremse, insbesondere mit Rücklaufsperre, an einem oder in einem ersten Führungselement (51) oder zwischen einem ersten Führungselement (51) und einer zugeordneten Führungsschiene (55) und mit einer vorbestimmten Haltekraft als Sollhaltekraft derart ausgebildet ist, dass sich beim Überschreiten der Sollhaltekraft ein jeweiliges erstes Führungselement (51) in einer jeweils zugeordneten Führungsschiene (Mund 50) der einwirkenden Kraft folgend bewegt,
- wobei die Sollknickkraft und/oder die Sollhaltekraft einen Wert aufweisen, welcher in einem Bereich entsprechend einer Beschleunigung im Bereich von 5 g oder darüber liegt.

9. Anzeigeeinrichtung (10) nach einem der vorangehenden Ansprüche, mit einer Antriebseinheit (80),
- welche zum Antreiben der ersten Führungselemente (51) und/oder der zweiten Führungselemente (52) und für ein getrenntes und/oder gemeinsames und insbesondere gleiches Bewegen der ersten Führungselemente (51) und zweiten Führungselemente (52) in einer jeweiligen Führungsschiene (55) eingerichtet ist und/oder
- welche mit einem oder mit mehreren steuerbaren Antrieben (81, 82) und mit diesen mechanisch gekoppelten oder koppelbaren und jeweiligen Führungselementen (51, 52) zugeordneten Antriebsmitteln (83, 84), insbesondere in Form von Bürstenkabeln oder Helixkabeln, welche für einen, insbesondere kämmenden, Eingriff durch erste und/oder zweite Führungselemente (51, 52) zu deren Bewegung eingerichtet sind, ausgebildet ist.

10. Fahrzeug (1), welches
- eine Karosserie (2),
- einen durch die Karosserie (2) gebildeten Innenraum (3) mit einem Dachhimmel (5) sowie
- eine am oder im Dachhimmel (5) angebrachte Anzeigeeinrichtung (10) nach einem der vorangehenden Ansprüche aufweist.

11. Fahrzeug (1) nach Anspruch 10, bei welchem
- zwei Führungsschienen (55) der Anzeigeeinrichtung (10) am oder im Dachhimmel (5) derart angebracht sind, dass sie sich mit gleicher Länge bündig und parallel zueinander in einer Längserstreckungsrichtung (X) des Fahrzeugs (1) erstrecken, insbesondere an oder - in Bezug auf eine Querstreckungsrichtung (Y) des Fahrzeugs (1) - in außen gelegenen Bereichen des Dachhimmels (5),
- zwei erste Führungselemente (51) der Anzeigeeinrichtung (10) derart in den Führungsschienen (55) aufgenommen sind, dass eine entsprechende erste Querkante (21) der Anzeigeeinheit (20) der Anzeigeeinrichtung (10), an deren Bereich die ersten Führungselemente (51) angebracht sind, parallel zur Querstreckungsrichtung (Y) des Fahrzeugs (1) und in Bezug auf die Längserstreckungsrichtung (X) des Fahrzeugs (1) in Richtung auf eine dem Fond des Fahrzeugs (1) zugewandte Seite zu angeordnet ist, und
- zwei zweite Führungselemente (52) der Anzeigeeinrichtung (10) derart in den Führungsschienen (54) aufgenommen sind, dass eine der ersten Querkante (21) gegenüberliegende zweite Querkante (21) der Anzeigeeinheit (20) der Anzeigeeinrichtung (10) in Richtung auf eine vom Fond des Fahrzeugs (1) abgewandte Seite zu angeordnet ist.

## Claims

1. Display device (10) for the interior (3) of a vehicle (1),
comprising:
- a display unit (20), which is configured to optically display information, and
- a movement device (50), which is configured to transfer the display unit (20), in particular controllably, between a non-use position (N), parallel to a headliner (5) of the vehicle (1), and a use position (G), in particular pivoted away from the headliner (5) of the vehicle (1), and to hold it, in particular controllably, in the non-use position (N) and/or the use position (G),
wherein the movement device (50) is configured
(i) with first guide elements (51), which are directly and rotatably mounted on the display unit (20) to define a pivot axis (61) for pivoting the display unit (20) at least between the non-use position (N) and the use position (G),
(ii) with second guide elements (52), which are each mechanically coupled to the display unit (20) via exactly one coupling lever (53) of the display device (10), by
- a first end (53-1) of a respective coupling lever (53) being rotatably mounted on the display unit (20) and
- a second end (53-2) of the respective coupling lever (53) being rotatably mounted on a second guide element (52), and
(iii) with guide rails (55) for mounting on the headliner (5), with a guide track (56), for receiving the first and second guide elements (51, 52) and for moving them therein along the guide track (56).

2. Display device (10) according to claim 1, wherein the coupling levers (53) of the second guide elements (52) are configured:
- as a pair,
- equal or substantially equal to each other,
- with equal length,
- linear or substantially linear,
- aligned parallel to each other and/or
- aligned flush with each other.

3. Display device (10) according to claim 1, wherein a position of a mounting point of a first end (53-1) of a coupling lever (53) on the display unit (20) is in each case
- spatially spaced from a position of a mounting point of an associated first guide element (51) and/or
- arranged at or in the region of a longitudinal edge (22) of the display unit (20).

4. Display device (10) according to any one of the preceding claims, wherein the first guide elements (51) and/or the second guide elements (52) are configured
- equal or substantially equal to each other or overall
- as sliders and/or
- configured for a sliding movement in a respective guide rail (55).

5. Display device (10) according to any one of the preceding claims, wherein
- the first guide elements (51) are mounted on or in the region of a first transverse edge (21) and/or a longitudinal edge (22) of the display unit (20) and/or
- in the state of the display device (10) mounted on the associated vehicle (1), the first transverse edge (21), in particular together with the pivot axis (61), is aligned parallel to a transverse extension direction (Y) of the vehicle (1).

6. Display device (10) according to any one of the preceding claims, wherein the display unit (20) is configured
- with a substantially rectangular shape,
- in the state of the display device (10) mounted on the associated vehicle (1), with transverse edges (21) aligned parallel to a transverse extension direction (Y) of the vehicle (1) and/or
- in the state of the display device (10) mounted on the associated vehicle (1), with longitudinal edges (22) aligned parallel to a longitudinal extension direction (X) of the associated vehicle (1).

7. Display device (10) according to any one of the preceding claims, wherein the guide rails (55) are configured
- as a pair,
- equal or substantially equal to each other,
- linear or substantially linear,
- aligned parallel to each other,
- aligned flush with each other, in particular with respect to their respective first and second ends (55-1, 55-2),
- in the state of the display device (10) mounted on the associated vehicle (1), mounted on or in the region of a headliner (5) and/or
- in the state of the display device (10) mounted on the associated vehicle (1), aligned parallel to a longitudinal extension direction (X) of the vehicle (1).

8. Display device (10) according to any one of the preceding claims, wherein
- a predetermined breaking point (53-3) with a predefined breaking force as a predetermined breaking force is formed on or in a respective coupling lever (53) in such a way that when the predetermined breaking force is exceeded, the coupling lever (53) buckles at the predetermined breaking point (53-3) and thereby transitions from a non-buckled normal form to a buckled safety form,
- a slip clutch (71) and/or brake, in particular with a non-return lock, is formed on or in a first guide element (51) or between a first guide element (51) and an associated guide rail (55) and with a predetermined holding force as a predetermined holding force in such a way that when the predetermined holding force is exceeded, a respective first guide element (51) moves in a respective associated guide rail (M and 50) following the applied force,
- wherein the predetermined breaking force and/or the predetermined holding force have a value which lies in a range corresponding to an acceleration in the range of 5 g or above.

9. Display device (10) according to any one of the preceding claims, with a drive unit (80),
- which is configured to drive the first guide elements (51) and/or the second guide elements (52) and for separate and/or joint and in particular equal movement of the first guide elements (51) and second guide elements (52) in a respective guide rail (55) and/or
- which is configured with one or more controllable drives (81, 82) and drive means (83, 84) mechanically coupled or couplable thereto and associated with respective guide elements (51, 52), in particular in the form of brush cables or helix cables, which are configured for an, in particular meshing, engagement by first and/or second guide elements (51, 52) for their movement.

10. Vehicle (1), which comprises
- a body (2),
- an interior (3) formed by the body (2) with a headliner (5) and
- a display device (10) according to any one of the preceding claims mounted on or in the headliner (5).

11. Vehicle (1) according to claim 10, wherein
- two guide rails (55) of the display device (10) are mounted on or in the headliner (5) in such a way that they extend with equal length flush and parallel to each other in a longitudinal extension direction (X) of the vehicle (1), in particular on or - with respect to a transverse extension direction (Y) of the vehicle (1) - in outer regions of the headliner (5),
- two first guide elements (51) of the display device (10) are received in the guide rails (55) in such a way that a corresponding first transverse edge (21) of the display unit (20) of the display device (10), in the region of which the first guide elements (51) are mounted, is arranged parallel to the transverse extension direction (Y) of the vehicle (1) and in relation to the longitudinal extension direction (X) of the vehicle (1) in the direction towards a side facing the rear of the vehicle (1), and
- two second guide elements (52) of the display device (10) are received in the guide rails (54) in such a way that a second transverse edge (21) of the display unit (20) of the display device (10) opposite the first transverse edge (21) is arranged in the direction towards a side facing away from the rear of the vehicle (1).

## Revendications

1. Dispositif d'affichage (10) pour l'intérieur (3) d'un véhicule (1),
comprenant :
- une unité d'affichage (20), qui est configurée pour afficher optiquement des informations, et
- un dispositif de mouvement (50), qui est configuré pour transférer l'unité d'affichage (20), en particulier de manière contrôlable, entre une position de non-utilisation (N), parallèle à un pavillon (5) du véhicule (1), et une position d'utilisation (G), en particulier pivotée à l'écart du pavillon (5) du véhicule (1), et pour la maintenir, en particulier de manière contrôlable, dans la position de non-utilisation (N) et/ou la position d'utilisation (G),
dans lequel le dispositif de mouvement (50) est configuré
(i) avec des premiers éléments de guidage (51), qui sont directement et de manière rotative montés sur l'unité d'affichage (20) pour définir un axe de pivot (61) pour faire pivoter l'unité d'affichage (20) au moins entre la position de non-utilisation (N) et la position d'utilisation (G),
(ii) avec des deuxièmes éléments de guidage (52), qui sont chacun couplés mécaniquement à l'unité d'affichage (20) via exactement un levier de couplage (53) du dispositif d'affichage (10), en
- une première extrémité (53-1) d'un levier de couplage respectif (53) étant montée de manière rotative sur l'unité d'affichage (20) et
- une deuxième extrémité (53-2) du levier de couplage respectif (53) étant montée de manière rotative sur un deuxième élément de guidage (52), et
(iii) avec des rails de guidage (55) pour le montage sur le pavillon (5), avec une piste de guidage (56), pour recevoir les premiers et deuxièmes éléments de guidage (51, 52) et pour les déplacer à l'intérieur le long de la piste de guidage (56).

2. Dispositif d'affichage (10) selon la revendication 1, dans lequel les leviers de couplage (53) des deuxièmes éléments de guidage (52) sont configurés :
- comme une paire,
- égaux ou sensiblement égaux entre eux,
- avec une longueur égale,
- linéaires ou sensiblement linéaires,
- alignés parallèlement les uns aux autres et/ou
- alignés de manière affleurante les uns avec les autres.

3. Dispositif d'affichage (10) selon la revendication 1, dans lequel une position d'un point de montage d'une première extrémité (53-1) d'un levier de couplage (53) sur l'unité d'affichage (20) est dans chaque cas
- espacée spatialement d'une position d'un point de montage d'un premier élément de guidage associé (51) et/ou
- disposée au niveau ou dans la région d'un bord longitudinal (22) de l'unité d'affichage (20).

4. Dispositif d'affichage (10) selon l'une quelconque des revendications précédentes, dans lequel les premiers éléments de guidage (51) et/ou les deuxièmes éléments de guidage (52) sont configurés
- égaux ou sensiblement égaux entre eux ou dans l'ensemble
- comme des glissières et/ou
- configurés pour un mouvement de glissement dans un rail de guidage respectif (55).

5. Dispositif d'affichage (10) selon l'une quelconque des revendications précédentes, dans lequel
- les premiers éléments de guidage (51) sont montés sur ou dans la région d'un premier bord transversal (21) et/ou d'un bord longitudinal (22) de l'unité d'affichage (20) et/ou
- dans l'état du dispositif d'affichage (10) monté sur le véhicule associé (1), le premier bord transversal (21), en particulier avec l'axe de pivot (61), est aligné parallèlement à une direction d'extension transversale (Y) du véhicule (1).

6. Dispositif d'affichage (10) selon l'une quelconque des revendications précédentes, dans lequel l'unité d'affichage (20) est configurée
- avec une forme sensiblement rectangulaire,
- dans l'état du dispositif d'affichage (10) monté sur le véhicule associé (1), avec des bords transversaux (21) alignés parallèlement à une direction d'extension transversale (Y) du véhicule (1) et/ou
- dans l'état du dispositif d'affichage (10) monté sur le véhicule associé (1), avec des bords longitudinaux (22) alignés parallèlement à une direction d'extension longitudinale (X) du véhicule associé (1).

7. Dispositif d'affichage (10) selon l'une quelconque des revendications précédentes, dans lequel les rails de guidage (55) sont configurés
- comme une paire,
- égaux ou sensiblement égaux entre eux,
- linéaires ou sensiblement linéaires,
- alignés parallèlement les uns aux autres,
- alignés de manière affleurante les uns avec les autres, en particulier par rapport à leurs premières et deuxièmes extrémités respectives (55-1, 55-2),
- dans l'état du dispositif d'affichage (10) monté sur le véhicule associé (1), montés sur ou dans la région d'un pavillon (5) et/ou
- dans l'état du dispositif d'affichage (10) monté sur le véhicule associé (1), alignés parallèlement à une direction d'extension longitudinale (X) du véhicule (1).

8. Dispositif d'affichage (10) selon l'une quelconque des revendications précédentes, dans lequel
- un point de rupture prédéterminé (53-3) avec une force de rupture prédéfinie en tant que force de rupture prédéterminée est formé sur ou dans un levier de couplage respectif (53) de telle manière que lorsque la force de rupture prédéterminée est dépassée, le levier de couplage (53) fléchit au point de rupture prédéterminé (53-3) et passe ainsi d'une forme normale non fléchie à une forme de sécurité fléchie,
- un embrayage à glissement (71) et/ou un frein, en particulier avec un verrou anti-retour, est formé sur ou dans un premier élément de guidage (51) ou entre un premier élément de guidage (51) et un rail de guidage associé (55) et avec une force de maintien prédéterminée en tant que force de maintien prédéterminée de telle manière que lorsque la force de maintien prédéterminée est dépassée, un premier élément de guidage respectif (51) se déplace dans un rail de guidage associé respectif (M et 50) suivant la force appliquée,
- dans lequel la force de rupture prédéterminée et/ou la force de maintien prédéterminée ont une valeur qui se situe dans une plage correspondant à une accélération dans la plage de 5 g ou au-dessus.

9. Dispositif d'affichage (10) selon l'une quelconque des revendications précédentes, avec une unité d'entraînement (80),
- qui est configurée pour entraîner les premiers éléments de guidage (51) et/ou les deuxièmes éléments de guidage (52) et pour un mouvement séparé et/ou conjoint et en particulier égal des premiers éléments de guidage (51) et des deuxièmes éléments de guidage (52) dans un rail de guidage respectif (55) et/ou
- qui est configurée avec un ou plusieurs entraînements contrôlables (81, 82) et des moyens d'entraînement (83, 84) mécaniquement couplés ou pouvant être couplés à ceux-ci et associés à des éléments de guidage respectifs (51, 52), en particulier sous forme de câbles à brosse ou de câbles hélicoïdaux, qui sont configurés pour un engagement, en particulier en prise, par les premiers et/ou deuxièmes éléments de guidage (51, 52) pour leur mouvement.

10. Véhicule (1), qui comprend
- une carrosserie (2),
- un intérieur (3) formé par la carrosserie (2) avec un pavillon (5) et
- un dispositif d'affichage (10) selon l'une quelconque des revendications précédentes monté sur ou dans le pavillon (5).

11. Véhicule (1) selon la revendication 10, dans lequel
- deux rails de guidage (55) du dispositif d'affichage (10) sont montés sur ou dans le pavillon (5) de telle manière qu'ils s'étendent avec une longueur égale de manière affleurante et parallèle l'un à l'autre dans une direction d'extension longitudinale (X) du véhicule (1), en particulier sur ou - par rapport à une direction d'extension transversale (Y) du véhicule (1) - dans des régions extérieures du pavillon (5),
- deux premiers éléments de guidage (51) du dispositif d'affichage (10) sont reçus dans les rails de guidage (55) de telle manière qu'un premier bord transversal correspondant (21) de l'unité d'affichage (20) du dispositif d'affichage (10), dans la région duquel les premiers éléments de guidage (51) sont montés, est disposé parallèlement à la direction d'extension transversale (Y) du véhicule (1) et par rapport à la direction d'extension longitudinale (X) du véhicule (1) dans la direction vers un côté faisant face à l'arrière du véhicule (1), et
- deux deuxièmes éléments de guidage (52) du dispositif d'affichage (10) sont reçus dans les rails de guidage (54) de telle manière qu'un deuxième bord transversal (21) de l'unité d'affichage (20) du dispositif d'affichage (10) opposé au premier bord transversal (21) est disposé dans la direction vers un côté faisant face à l'opposé de l'arrière du véhicule (1).
